# EUROPEAN PATENT APPLICATION

(11) **EP 4 741 918 A1**
(43) Date of publication of application: **13.05.2026**
(21) Application number: 24835208.0
(22) Date of filing: 14.06.2024
(51) Int. Cl.: G02F 1/153

(54) **ELECTROCHROMIC DIAPHRAGM, COLOR-CHANGING APPARATUS, AND TERMINAL PRODUCT**

(30) Priority: 04.07.2023 CN 202310812908
(71) Applicant: Guangyi Intelligent Tech (Suzhou) Co., Ltd., Suzhou, Jiangsu 215000 (CN)
(72) Inventor: WANG, Weishu, Suzhou, Jiangsu 215000 (CN); LU, Yicai, Suzhou, Jiangsu 215000 (CN)
(74) Representative: Biallo, Dario
(86) International application number: PCT/CN2024/099276
(87) International publication number: WO 2025/007725

(57) **Abstract**

The present application provides an electrochromic film, a color-changing device and a terminal product, belonging to the field of electrochromic technology. The electrochromic film includes an edge portion; the edge portion includes a corner portion and a straight-edge portion, the corner portion is provided with a corner electrode, the straight-edge portion is provided with straight-edge electrodes, and the straight-edge electrodes and the corner electrode are spaced apart; the electrochromic film also includes at least one of the following features: the length of the corner electrode is L₁, the average length of the straight-edge electrodes is L₂, and L₂ < L₁; the corner electrode includes a first side extending along a first direction and a second side extending along a second direction, the included angle α between the first side and the second side is in the range of 45° ≤ α ≤ 135°; the perimeter of the edge portion is D, the corner electrode is arc-shaped, and the radius of the corner electrode is N. The value of N is in the range of 1/9 × D ≤ N. This effectively avoids accelerated aging of the corner portion and achieves a balance of electric field intensity at the edge portion of the film.

## Description

### CROSS REFERENCE TO RELATED APPLICATIONS

The present application claims priority to Chinese Patent Application No. 2023108129081, filed on July 4, 2023, entitled "Electrochromic Film, color-changing device and terminal product," the entire contents of which are incorporated herein by reference.

### TECHNICAL FIELD

The present application relates to the technical field of electrochromic technology, and more particularly to an electrochromic film, a color-changing device and a terminal product.

### BACKGROUND

Electrochromism is a technology in which electrochromic materials undergo reversible and stable coloring or fading under the action of an external voltage. Typically, busbars are provided on each of the two conductive substrate layers of an electrochromic film, and the electrochromic film is electrically connected to an external power source through the busbars, thereby forming a voltage difference across the two ends of the electrochromic material, causing the electrochromic material of the electrochromic film to change color in response to the change in the voltage difference.

Currently, in the use of electrochromic films, the corner regions of the film are prone to premature failure, eventually causing the entire film to fail rapidly.

### SUMMARY

In view of this, an objective of the present application is to overcome the shortcomings of the prior art and provides an electrochromic film, a color-changing device and a terminal product.

The present application provides the following technical solution: an electrochromic film, which includes an edge portion;
the edge portion includes a corner portion and a straight-edge portion, the corner portion is correspondingly provided with a corner electrode, the straight-edge portion is correspondingly provided with straight-edge electrodes, and the straight-edge electrodes are spaced apart from the corner electrode;
the electrochromic film further includes at least one of following features:
a length of the corner electrode is L₁, an average length of the straight-edge electrodes is L₂, and L₂ < L₁;
the corner electrode includes a first side extending along a first direction and a second side extending along a second direction, an included angle α between the first side and the second side is in a range of 45° ≤ α ≤ 135°;
a perimeter of the edge portion is D, the corner electrode is arc-shaped, and a radius of the corner electrode is N, wherein a value of N is in a range of 1/9 × D ≤ N.

Optionally, the L₁ and the L₂ satisfy a condition that: L₂ < L₁ < 4 × L₂.

Optionally, a difference between L₁ and L₂ is greater than 20% of the L₂.

Optionally, a straight-line distance between two ends of the corner electrode is L, wherein the L and the L₂ satisfy a condition that: L₂ < L.

Optionally, a first interval region is provided between the corner electrode and a straight-edge electrode adjacent to the corner electrode, a length of the first interval region is L₃;
a second interval region is provided between the adjacent straight-edge electrodes, a length of the second interval region is L₄;
in which, L₄ ≤ L₃.

Optionally, the corner electrode protrudes towards the corner portion.

Optionally, the electrochromic film includes a first substrate layer, a first conductive layer, an electrochromic layer, a second conductive layer, and a second substrate layer stacked sequentially; the edge portion of the electrochromic film is provided with a first groove and a second groove; the electrochromic film is electrically connected to a busbar, the busbar includes a first busbar and a second busbar, the corner electrode includes a first corner electrode and a second corner electrode, and the straight-edge electrodes include a first straight-edge electrode and a second straight-edge electrode;
the first groove penetrates through the first substrate layer, the first conductive layer, and the electrochromic layer along a thickness direction of the electrochromic film to expose a portion of the second conductive layer, forming the first corner electrode and the first straight-edge electrode, and the first corner electrode and the first straight-edge electrode are electrically connected to the first busbar; and
the second groove penetrates through the second substrate layer, the second conductive layer, and the electrochromic layer along the thickness direction of the electrochromic film to expose a portion of the first conductive layer, forming the second corner electrode and the second straight-edge electrode, and the second corner electrode and the second straight-edge electrode are electrically connected to the second busbar.

Optionally, the value of α is in a range of 90° ≤ α ≤ 135°.

Optionally, a blocking portion is provided corresponding to the corner electrode, and the blocking portion blocks or reduces a current of a busbar from the corner electrode to a central portion of the electrochromic film.

Optionally, the blocking portion includes an etched region after etching a portion of the conductive layer and/or a filler with a resistance greater than that of the busbar.

Optionally, for any point on the edge portion between two points separated by a first preset distance, the perpendicular distance from this point to the line segment connecting the two points is defined as a second preset distance; when the second preset distance is less than or equal to *n* times the first preset distance, where *n* ranges from 5% to 10%, the corresponding edge portion between the two points is considered as the straight-edge portion;
or, any point on the corresponding edge portion between two points at a first preset distance divides the edge portion between the two points into a first segment and a second segment; a line tangent to the first segment through the point is a first tangent line; a line tangent to the second segment through the point is a second tangent line; when the angle between the first tangent line and the second tangent line is greater than or equal to 135°, the corresponding edge portion between the two points is considered as the straight-edge portion.

Optionally, a value of the first preset distance ranges from 30 mm to 300 mm.

Optionally, for any point on the edge portion between two points separated by a first preset distance, the perpendicular distance from this point to the line segment connecting the two points is defined as a second preset distance; when the second preset distance is larger than *n* times the first preset distance, where *n* ranges from 5% to 10%, the corresponding edge portion between the two points is considered as the corner portion;
or, the corner portion includes a vertex and two ends with edges connected to each other; any point on the corresponding edge portion between two points at a first preset distance divides the edge portion between the two points into a first segment and a second segment; a line tangent to the first segment through the point is a first tangent line; a line tangent to the second segment through the point is a second tangent line; when the angle between the first tangent line and the second tangent line is less than 135°, the point is considered as the vertex of the corner portion.

Optionally, when the electrochromic film is charged and discharged, a maximum electric field intensity in a corner region corresponding to the corner electrode is E₃ₘₐₓ, and a minimum electric field intensity in the edge portion is E₄ₘᵢₙ;
in which, E₃ₘₐₓ < E₄ₘᵢₙ or a difference between E₃ₘₐₓ and E₄ₘᵢₙ is within 10% of the E₄ₘᵢₙ to 30% of the E₄ₘᵢₙ.

In some embodiments of the present application, a color-changing device is provided, which includes a substrate layer and an electrochromic film, and the substrate layer and the electrochromic film are stacked together.

In some embodiments of the present application, a terminal product is provided, which includes an electrochromic film according to any one mentioned above or a color-changing device mentioned above, and the terminal product includes any one of a rearview mirror, a curtain wall, a vehicle sunroof , a vehicle side window, a vehicle windshield, a housing of an electronic product, an eyeglass, a vehicle, and a display panel.

The embodiments of the present application have the following advantages: since the current in the interval region gradually decreases due to the influence of the conductive layer resistance in the electrochromic film during its diffusion towards the corner portion, by increasing the length of the corner electrode and/or increasing the angle between the corner electrodes to increase the distance between the interval regions adjacent to the two ends of the corner electrode, thereby reducing the superimposed current in the interval region at the corner. This reduces the electric field intensity near the corner of the electrochromic film and prevents excessively high electric field intensity at the corner of the electrochromic film from causing accelerated aging at the corner. This achieves a balanced electric field intensity at the edge portion of the electrochromic film, and improves the stability and service life of the electrochromic film.

In order to make the above-mentioned objects, features, and advantages of the present application more apparent and understandable, preferred embodiments are described below in detail with reference to the accompanying drawings.

### BRIEF DESCRIPTION OF THE DRAWINGS

In order to more clearly illustrate the technical solutions of the embodiments of the present application, the drawings used in the embodiments will be briefly described below. It should be understood that the following drawings only show some embodiments of the present application and should not be regarded as a limitation of the scope. For those skilled in the art, other related drawings can be obtained based on these drawings without creative effort.
FIG. 1 shows a structural schematic diagram of an embodiment of an electrochromic film of the present application;
FIG. 2 shows a structural schematic diagram of the electrochromic film of FIG. 1 of the present application from another perspective;
FIG. 3 shows a cross-sectional view of a section A-A in FIG. 2;
FIG. 4 shows a structural schematic diagram of a first conductive layer of an embodiment of an electrochromic film of the present application;
FIG. 5 shows a structural schematic diagram of a second conductive layer of an embodiment of an electrochromic film of the present application;
FIG. 6 shows a structural schematic diagram of another embodiment of an electrochromic film of the present application;
FIG. 7 shows a structural schematic diagram of yet another embodiment of an electrochromic film of the present application;
FIG. 8 shows a structural schematic diagram of another embodiment of an electrochromic film in the present application;
FIG. 9 shows an enlarged view of a part B in FIG. 8;
FIG. 10 shows a cross-sectional view of a section C-C in FIG. 8;
FIG. 11 shows a schematic diagram of another embodiment of an electrochromic film of the present application;
FIG. 12 shows an enlarged view of a part D in FIG. 11;
FIG. 13 shows a schematic diagram of another embodiment of an electrochromic film of the present application;
FIG. 14 shows a schematic diagram of another embodiment of an electrochromic film of the present application;
FIG. 15 shows a schematic diagram of another embodiment of an electrochromic film of the present application; and
FIG. 16 shows a schematic diagram of an embodiment of a color-changing device of the present application.

The main component symbols are listed as followings:
100-electrochromic film; 110-corner electrode; 111-first corner electrode; 112-second corner electrode; 120-straight-edge electrode; 121-first straight-edge electrode; 122-second straight-edge electrode; 130-first interval region; 140-second interval region; 150-first substrate layer; 160-first conductive layer; 170-electrochromic layer; 180-second conductive layer; 190-second substrate layer; 200-busbar; 210-first busbar; 220-second busbar; 300-central portion; 400-first groove; 500-second groove; 600-first blocking portion; 700-second blocking portion; 800-edge portion; 900-substrate layer; 1000-shielding layer.

### DETAILED DESCRIPTION OF THE EMBODIMENTS

Embodiments of the present application are described in detail below, examples of which are shown in the accompanying drawings. The same or similar reference numerals denote the same or similar elements or elements having the same or similar functions throughout. The embodiments described below with reference to the accompanying drawings are exemplary and are only used to explain the present application, and should not be construed as limiting the present application.

It should be noted that when an element is referred to as being "fixed to" another element, it can be directly on the other element or there may be an intervening element. When an element is considered to be "connected to" another element, it can be directly connected to the other element or there may be an intervening element. Conversely, when an element is referred to as being "directly arranged on" another element, there is no intervening element. The terms "vertical," "horizontal," "left," "right," and similar expressions used herein are for illustrative purposes only.

In the present application, unless otherwise expressly specified and limited, the terms "installed," "connected," "linked," "fixed," etc., should be interpreted broadly. For example, they can refer to a fixed connection, a detachable connection, or an integral part; they can refer to a mechanical connection or an electrical connection; they can refer to a direct connection or an indirect connection through an intermediate medium; they can refer to the internal connection of two components or the interaction between two components. Those skilled in the art can understand the specific meaning of the above terms in the present application according to the specific circumstances.

Furthermore, the terms "first" and "second" are used for descriptive purposes only and should not be construed as indicating or implying relative importance or implicitly specifying the number of indicated technical features. Thus, a feature defined as "first" or "second" may explicitly or implicitly include one or more of that feature. In the description of the present application, "a plurality of" means two or more, unless otherwise expressly and specifically limited.

Unless otherwise defined, all technical and scientific terms used herein have the same meaning as commonly understood by those skilled in the art to which the present application pertains. The terminology used herein in the template description is for the purpose of describing particular embodiments only and is not intended to limit the present application. As used herein, the term "and/or" includes any and all combinations of one or more of the associated listed items.

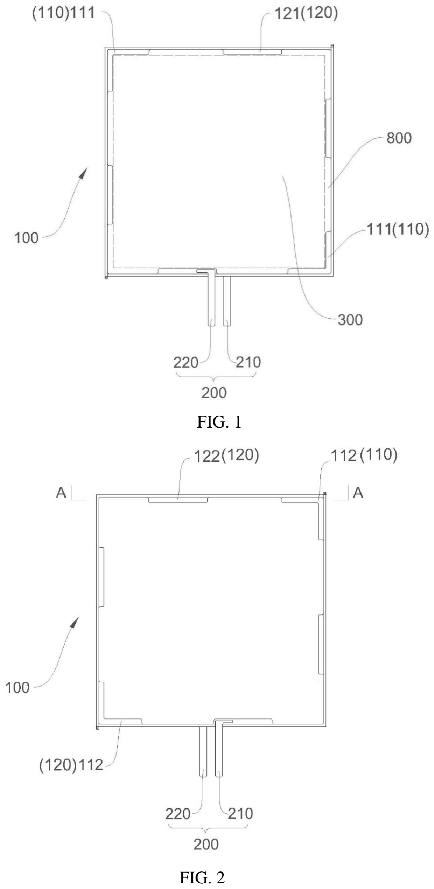

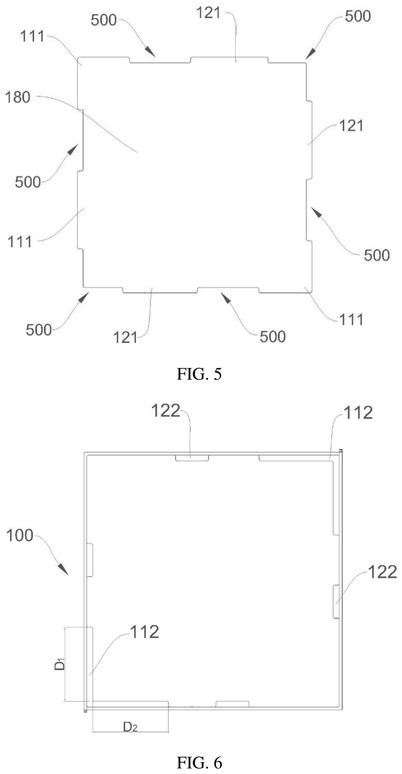

The present application will be further described in detail below with reference to FIGS. 1 to 16.

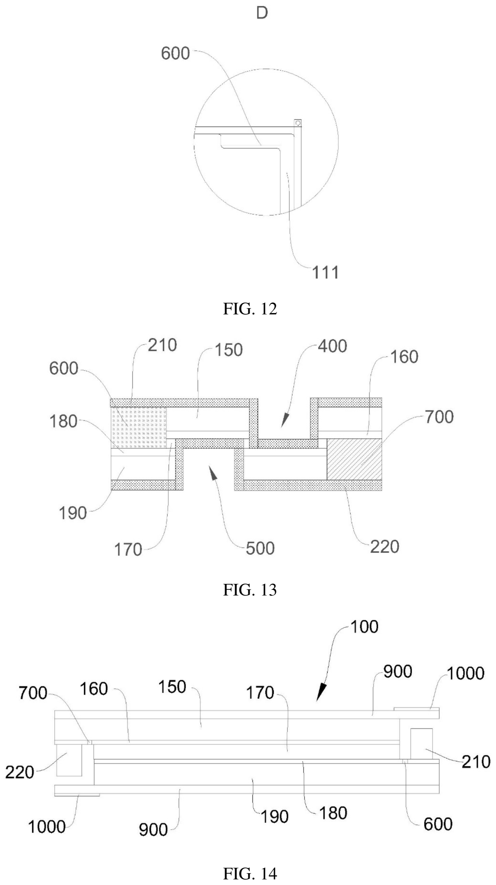

As shown in FIGS. 1 and 13, some embodiments of the present application provide an electrochromic film 100, which is mainly applicable to intelligent dimming fields such as glass curtain walls, vehicle side windows, vehicle sunroofs, sun visors, rearview mirrors, and electronic device housings. By changing the voltage across the electrochromic film 100, the electrochromic film 100 changes color, thereby regulating the amount of light passing through the electrochromic film 100.

Specifically, the electrochromic film 100 includes corner electrodes 110 disposed at the corner portion of the edge of the electrochromic film 100, and straight-edge electrodes 120 disposed at the non-corner portion of the edge of the electrochromic film 100, i.e., the straight-edge portion.

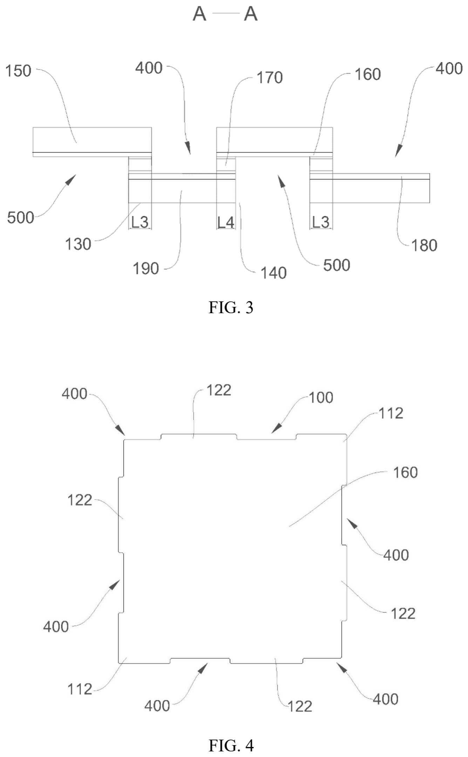

As shown in FIGS. 2 and 3, the electrochromic film 100 includes a first substrate layer 150, a first conductive layer 160, an electrochromic layer 170, a second conductive layer 180, and a second substrate layer 190, which are sequentially stacked.

Furthermore, the first substrate layer 150 and the second substrate layer 190 are both made of transparent flexible materials such as PET (Polyethylene terephthalate) or PC, and the first conductive layer 160 and the second conductive layer 180 are both made of transparent ITO (Indium Tin Oxide) material; in this embodiment, ITO is attached to the first substrate layer 150 and the second substrate layer 190 by magnetron sputtering. The electrochromic layer 170 includes an electrochromic material layer, an electrolyte layer, and an ion-conducting layer, which are sequentially stacked. In other embodiments, the electrochromic layer 170 may also be a liquid crystal, etc. When the first conductive layer 160 and the second conductive layer 180 are respectively connected to an external power source, and a current is passed through the first conductive layer 160 and the second conductive layer 180, an electric field is formed between the first conductive layer 160 and the second conductive layer 180, so that the electrochromic layer 170 undergoes a stable and reversible color change under the action of the electric field.

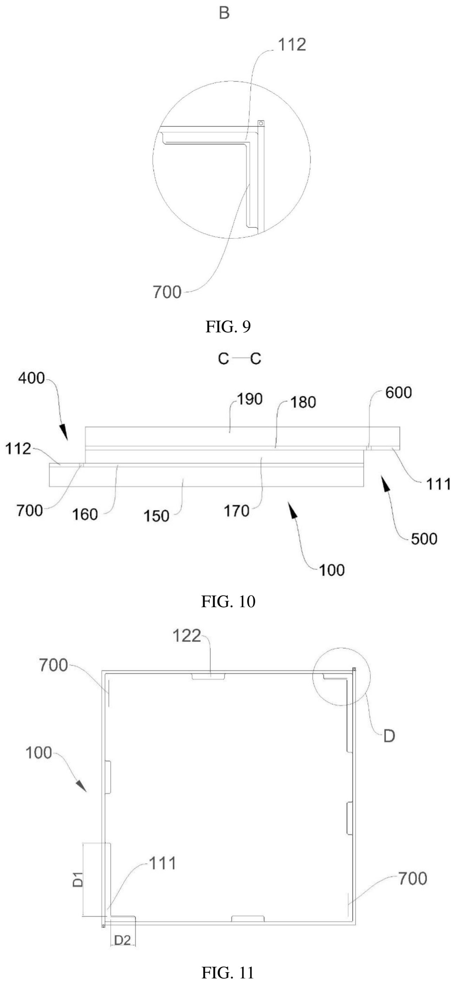

Specifically, as shown in FIGS. 1 and 10, the electrochromic film 100 includes a central portion 300 and an edge portion 800 adjacent to the outer periphery of the central portion 300. The central portion 300 of the electrochromic film 100 is formed by stacking the central regions of a first substrate layer 150, a first conductive layer 160, an electrochromic layer 170, a second conductive layer 180, and a second substrate layer 190. The first substrate layer 150, the first conductive layer 160, the electrochromic layer 170, the second conductive layer 180, and the second substrate layer 190 located in the central portion 300 of the electrochromic film 100 are completely overlapped. This central portion 300 is also the color-changing region and/or visible region of the electrochromic film 100. It is worth noting that, for ease of understanding, the region within the dashed box in FIG. 1 represents the central portion 300 of the film; the boundary between the central portion 300 and the edge portion 800 is not limited by the position of the dashed line in the figure.

Additionally, as shown in FIG. 10, the first substrate layer 150 extends outward from the central region of the first substrate layer 150 toward the electrochromic film 100 to form an edge portion 800 of the first substrate layer 150, and the second substrate layer 190 extends outward from the central region of the second substrate layer 190 toward the electrochromic film 100 to form an edge portion 800 of the second substrate layer 190; the projections of the edge portion 800 of the first substrate layer 150 and the edge portion 800 of the second substrate layer 190 onto the electrochromic layer 170 do not overlap at least partially; the first conductive layer 160 also extends outward from the central region of the first conductive layer 160 toward the electrochromic film 100 and is attached to the surface of the edge portion 800 of the first substrate layer 150 to form an edge portion 800 of the first conductive layer 160; the second conductive layer 180 also extends outward from the central region of the second conductive layer 180 toward the electrochromic film 100 and is attached to the surface of the edge portion 800 of the second substrate layer 190 to form an edge portion 800 of the second conductive layer 180. The electrochromic layer 170 also extends outward from the central region of the electrochromic layer 170 toward the electrochromic film 100 and is attached between the overlapping regions of the edge portions 800 of the first conductive layer 160 and the edge portions 800 of the second conductive layer 180, forming the edge portion 800 of the electrochromic layer 170. The edge portion 800 of the electrochromic film 100 includes the aforementioned edge portions 800 of the first substrate layer 150, the first conductive layer 160, the electrochromic layer 170, the second substrate layer 190, and the first conductive layer 160. Specifically, as shown in FIG. 10, the edge portions 800 of the first substrate layer 150 and the second substrate layer 190 can extend in opposite directions, that is, relative to the plane where the electrochromic film 100 is located, the first conductive substrate and the second conductive substrate extend in the X direction or the -X direction respectively, so that their projections do not overlap at all. In other embodiments, as shown in FIG. 3, the edge portion 800 of the first substrate layer 150 and the edge portion 800 of the second substrate layer 190 may extend in the same direction. Optionally, in this embodiment, both the first conductive substrate and the second conductive substrate on each side extend outward from the electrochromic film 100 (outward from the paper plane in FIG 3), ensuring that their projections on the plane of the electrochromic layer 170 do not overlap at least partially, forming a multi-electrode structure. The first conductive layer 160, corresponding to the non-overlapping projections of the edge portions 800 of the first substrate layer 150 and the second substrate layer 190, is electrically connected to one busbar to serve as the positive or negative electrode of the electrochromic film 100. The second conductive layer 180 is electrically connected to another busbar to serve as the negative or positive electrode of the electrochromic film 100, thereby providing voltage to the electrochromic layer 170.

The edge portion 800 includes a corner portion and a straight-edge portion, a plurality of corner portions and a plurality of straight-edge portions are provided, and are associated with the shape of the electrochromic film 100. For example, when the electrochromic film 100 is polygonal, the number of corner portions is equal to the number of sides of the electrochromic film 100. It is understood that if the electrochromic film 100 is quadrilateral, the number of corner portions is four; if the electrochromic film 100 is n-sided, the number of corner portions is n. In other embodiments, the shape of the electrochromic film 100 can be irregular. For irregular shapes, there are curved parts at the edges, which correspond to corner portions. Furthermore, the curvature of the edge portion 800 can be defined within a certain range as a straight-edge portion, indicating that this portion can be approximated as a straight line.

Furthermore, in an optional embodiment of the present application, in the edge portion 800 of the electrochromic film 100, the perpendicular distance from any point on the edge portion 800 corresponding to two points at a first preset distance to the line segment connecting the two points is a second preset distance. When the second preset distance is greater than *n* times the first preset distance, the value of *n* ranges from 5% to 10%, and the edge portion 800 corresponding to the two points is a corner portion; in contrast, when the second preset distance is less than or equal to *n* times the first preset distance, the value of *n* ranges from 5% to 10%, and the edge portion 800 corresponding to the two points is a straight-edge portion. The first preset distance ranges from 5 cm to 20 cm; the second preset distance is 5% to 10% of the first preset distance, preferably 6%. For example, the distance between the farthest point of the electrodes corresponding to two points at a first preset distance of 5 cm and the line connecting the two points is less than 0.3 cm. As another example, the distance between the farthest point of the electrodes corresponding to two points at a distance of 10 cm and the line connecting the two points is less than 0.5 cm. For another example, the distance between the farthest point of the electrodes corresponding to two points at a distance of 20 cm and the line connecting the two points is less than 1 cm, then the corresponding portion within these two points is considered a straight-edge portion. Specifically, the size of the first preset distance is related to the size of the electrochromic device, the material of the conductive layer, and the length of the electrodes of the electrochromic device, and can be adjusted according to the specific application. It is worth noting that when the maximum value of the distance between the corresponding edge portion 800 and the line connecting the two endpoints is greater than the second preset distance, the edge is considered a corner portion, and the corresponding electrode is a corner electrode. Alternatively, the corner portion is formed by the intersection of two straight-edge portions, and the angle between the two straight-edge portions is less than 135°. In this embodiment, the corner portion includes the ends of two connected straight-edge portions, the corner region is the region formed between the ends of two connected straight-edge portions, and the included angle between the two straight-edge portions is less than 135°; the length of the ends of the straight-edge portions is specifically set according to the size of the electrochromic device. Alternatively, if the maximum distance from the edge portion 800 to the line connecting the two endpoints is greater than the second preset distance, the region between the corresponding edge portions 800 is considered as a corner portion. When the angle between two connected straight-edge portions is greater than 135°, the two straight-edge portions can also be considered to constitute a new straight-edge portion.

Optionally, further improvements are made based on the above embodiment, any point on the edge portion 800 corresponding to two points at a first preset distance divides the edge portion 800 between the two points into a first segment and a second segment. The line tangent to the first segment through the point is the first tangent line, and the line tangent to the second segment through the point is the second tangent line. When the angle between the first tangent line and the second tangent line is greater than or equal to 135°, the edge portion 800 corresponding to the two points is a straight-edge portion. Optionally, a corner includes a vertex and two connected ends; any point on the edge portion 800 corresponding to two points at a first preset distance divides the edge portion 800 between the two points into a first segment and a second segment. The line tangent to the first segment through the point is the first tangent line, and the line tangent to the second segment through the point is the second tangent line. When the angle between the first tangent line and the second tangent line is less than 135°, the point is the vertex of the corner portion.

Specifically, each corner portion of the film is provided with one corner electrode, and the corner electrode protrudes towards the corner portion of the electrochromic film 100, so as to away from the central portion 300 of the electrochromic film 100. This is equivalent to setting the corner region away from the visible region, so that even if the corner region fails, it is blocked by the shielding layer, reducing the visual impact on the user. The straight-edge portion is provided with a plurality of spaced straight-edge electrodes, which are spaced apart from the corner electrodes, to form a multi-electrode structure at the edge portion 800 of the electrochromic film 100. The corner electrodes and the straight-edge electrodes of the same polarity are electrically connected to the busbars of the same polarity, where the busbars of the same polarity can refer to a single busbar or multiple busbars. When referring to the single busbar, it means that corner electrodes and straight-edge electrodes of the same polarity are electrically connected to the same busbar. When referring to multiple busbars, each straight-edge electrode of the same polarity is electrically connected to one busbar, and each corner electrode of the same polarity is electrically connected to another busbar, and each busbar has the same polarity. Furthermore, here, a busbar of the same polarity refers to one connected to the positive or negative electrode of an external power source. Optionally, in this embodiment, there is one busbar, which is attached along the edge of the electrochromic film 100 and sequentially electrically connected to corner electrodes and straight-edge electrodes of the same polarity. This busbar can be connected to the positive or negative electrode of an external power source. In other embodiments, there can be multiple busbars of the same polarity. Multiple busbars are first attached to the corner electrodes and straight-edge electrodes, and then connected in series to the positive or negative electrode of an external power source.

It should be noted that the busbars electrically connected to the corner electrodes and the straight-edge electrodes can form an electrical connection with the positive and negative electrodes of an external power source. This allows the current from the external power source to be conducted to the corner electrodes and the straight-edge electrodes of the electrochromic film 100 when the electrochromic film 100 is electrically connected to the external power source via the busbars. Simultaneously, the current is conducted through the corner electrodes and the straight-edge electrodes to the first conductive layer 160 and the second conductive layer 180, thereby forming an applied electric field between the first conductive layer 160 and the second conductive layer 180. This causes the electrochromic layer 170 to undergo a stable and reversible color change under the action of the applied electric field.

The inventors have discovered that in the prior art, when the corner electrodes 110 and the straight-edge electrodes 120 are electrically connected to the external power source via the busbars, an electric field is formed between the positive and negative electrodes. At the beginning of charging and discharging, due to the arrangement of a full circle of busbars, the potential of the first conductive layer 160 and the second conductive layer 180 stacked in the interval region between the corner electrode 110 and the adjacent straight-edge electrode 120 is relatively large, and the distance between the first conductive layer 160 and the second conductive layer 180 is very small (the difference between the first conductive layer 160 and the second conductive layer 180 is the thickness of the electrochromic stacked layer), usually only tens of micrometers. Therefore, during the charging and discharging of the film, an electric field is formed in the interval region between the corner electrode 110 and the adjacent straight-edge electrode 120. For the electric field formed between a single corner electrode 110 and the straight-edge electrode 120, the electric field intensity of this single interval region is the strongest. The closer to the corner electrode 110 and the straight-edge electrode 120, the greater the electric field intensity. Therefore, during the charging and discharging process, the electric field intensity of the electrochromic film 100 gradually weakens outward from the interval region between the corner electrode and the straight-edge electrode. When the film is energized and charged/discharged, an electric field is generated between the two adjacent electrodes on each side of the corner region. The electric field in the interval regions on either side of the corner portion of the electrochromic film 100 gradually decreases towards the corner region, resulting in a superposition of electric field in the corner region. This superposition creates a new electric field in the corner region, causing the field intensity in the corner region to be stronger than that in the interval regions. Prolonged charging and discharging in this region leads to premature failure. The region formed by enclosing the X and Y axes of the corner electrodes and the edges of the corner electrodes is called the corner region.

Therefore, in one embodiment of the present application, the length of the corner electrode 110 is L₁, the length of the corner electrode 110 refers to the sum of the lengths of the corner electrodes, i.e., the total length of the extended paths of the corner electrodes (for example, when the corner electrode includes two connected sides, the sum of the lengths of the two sides is the length of the corner electrode); the average length of the straight-edge electrodes 120 is L₂, the length of the straight-edge electrode 120 refers to the length of the straight-edge electrode extending to both sides from both ends, and the average length L₂ of the straight-edge electrodes is the ratio of the sum of the lengths of all straight-edge electrodes 120 to the number of straight-edge electrodes 120; L₂ < L₁. That is, the average length of the straight-edge electrodes is less than the length of the corner electrode. Optionally, the average length of the straight-edge electrodes 120 is greater than or equal to 10 mm. Optionally, the length of the straight-edge electrode closest to the corner electrode is less than the length of the corner electrode. Adjacent corner electrode and straight-edge electrode have opposite polarities, and adjacent straight-edge electrodes also have opposite polarities. Therefore, an electric field is formed between adjacent electrodes during charging and discharging, and the closer to the position between two adjacent electrodes, the greater the electric field intensity; the farther away from these two electrodes, the weaker the electric field intensity. In the embodiment, by increasing the length L₁ of the corner electrode 110 to increase the distance between the two ends of the corner electrode, thus increasing the distance between the positions with the strongest electric field. The longer the corner electrode, the farther distance the position with the strongest electric field is. This means that the position where the electric field superimposes in the corner region is further away from the position with the strongest electric field. Furthermore, since the electric field intensity in the interval region gradually weakens from the central region outwards, the intensity of the two superimposed electric fields is relatively weaker than in the prior art, thereby avoiding excessively high electric field intensity at the corner portion of the electrochromic film 100 and mitigating the speed of corner failure of the electrochromic film 100. Furthermore, it can make the electric field intensity in the corner region after superposition closer to that in the interval region, so that the field intensity of the entire film is more uniform; achieving the balance of electric field intensity in the edge portion 800 of the electrochromic film 100, thereby effectively preventing corner failure of the electrochromic film 100, and improving the stability and service life of the electrochromic film 100.

In addition to the electric field formed between the positive and negative electrodes causing corner failure, the current conducted on both sides of the corner electrode corresponding to the corner region can also cause premature corner failure. Because the busbars are attached to both sides of the corner electrode, the surface resistance of the conductive layer in the corner region is relatively smaller than that in other regions. Both sides of the corner electrode will diffuse and conduct current from the electrode into the film, resulting in current superposition in the corner region and causing a localized excessively strong electric field, leading to overcharging and over-discharging in that region. To address this, some embodiments of the present application improve any of the above embodiments by including a first side extending along a first direction and a second side extending along a second direction in the corner electrode. The angle α between the first side and the second side is set to a range of 45°≤α≤135°. Specifically, the range of α is any one of 45°≤α≤135°, 50°≤α≤135°, 55°≤α≤135°, 60°≤α≤135°, 65°≤α≤135°. 35°, 70°≤α≤135°, 75°≤α≤135°, 80°≤α≤135°, 85°≤α≤135°, 90°≤α≤135°, 95°≤α≤135°, 100°≤α≤135°, 105°≤α≤135°, 110°≤α≤135°, 115°≤α≤135°, 120°≤α≤135°, 125°≤α≤135°, 130°≤α≤135°, 45°≤α≤130°, 45°≤α≤125°, 45°≤α≤120°, 45°≤α≤115°, 45°≤α≤110°, 45°≤α≤105°, 45°≤α≤100°, 45°≤α≤95°, and 45°≤α≤90°. It is understandable that the larger the angle between the two sides of the corner electrode, the greater the distance between the two sides. In this case, due to the loss and voltage drop during conduction of the current, the overlapping point is farther from the edge, thus preventing excessive current even after current overlap and mitigating the possibility of corner region failure. Furthermore, by adjusting the angle of the corner electrode, the newly formed electric field and the electric field intensity at the edge are brought into a balanced state; this avoids excessively high electric field intensity at the corner portion of the electrochromic film 100, so that the superimposed field intensity is closer to the field intensity at the edge, and the field intensity of the entire film is more uniform; thus achieving the balance of electric field intensity at the edge portion 800 of the electrochromic film 100, thus the corner failure of the electrochromic film 100 is effectively prevented and the stability and service life of the electrochromic film 100 are improved.

Specifically, the first side and the second side of the corner electrode are intersected. This intersection can be at a single point or a chamfered arc. For example, the corner electrode also includes an arc section, and the two ends of the arc section are respectively connected to the first side and the second side. The length of the arc section can be considered as a single point relative to the first side and the second side, meaning the length of the arc section is relatively small compared to the first side and the second side.

Optionally, when the length of the corner electrode is constant, that is, when the sum of the lengths of the two sides of the corner electrode remains unchanged, or when the corner electrode is less than or equal to the length of the straight side electrode, the included angle α of the corner electrode is in the range of 90°≤α≤135°. It can be understood that the larger the value of α, the farther the distance between the two ends of the corner electrode is, that is, the greater the distance between the two adjacent interval regions of the corner electrode. As can be seen from the above embodiments, the greater the distance between the interval regions at the two ends of the corner electrode, the smaller the superimposed electric field generated at the corner portion during the diffusion process of the current through the interval region, which effectively reduces the electric field intensity at the corner portion, thereby effectively preventing corner failure of the electrochromic film 100. Specifically, in the edge portion 800, when the lengths of the two adjacent sides of the corner electrode are equal, by increasing the included angle α of the corner electrode, the distance between the two ends of the corner electrode is increased, thus the distance between the two adjacent interval regions is increased and the distance between the two sides of the corner electrode is also increased. Similarly, when the lengths of the two adjacent sides of the corner electrode are unequal, by increasing the included angle α, the distance between the two ends of the corner electrode is also increased; the effects are not elaborated here. Furthermore, if the included angle α of the corner electrode is too large, it may affect the wiring of the electrochromic film 100, thus affecting the overall appearance of the electrochromic film 100. Therefore, in order to improve the wiring efficiency and quality on the electrochromic film 100 and enhance its aesthetic appearance, the included angle α of the corner electrode is preferably in the range of 90°≤ α <135°.

Optionally, when the value of α is in the range of 45°≤α≤90°, the length L₁ of the corner electrode is not less than 10% of the total length of the edge portion 800 by increasing length of the corner electrode. Thus, by increasing the length of the corner electrode, the distance between the two adjacent interval regions can be increased, so as to avoid the corner region failing rapidly due to the small distance between the two sides of the corner electrode and the small distance between the two ends of the corner electrode when the included angle of the corner electrode is acute. In addition, by increasing the length of the corner electrode, the conduction speed of current from the corner electrode to the central portion 300 of the electrochromic film 100 can be increased, thereby increasing the color-changing speed of the electrochromic film 100. Specifically, when the included angle α of the corner electrode is too small, for example, less than 45°, the distance between the two ends of the corner electrode is too short, and the distance between the two sides of the corner electrode is too small, resulting in a large superimposed electric field in the corner electrode region. This fails to effectively prevent corner failure of the electrochromic film 100. Corner failure can be avoided by increasing the electrode length. Therefore, the optional range of α is 45°< α ≤ 90°.

Optionally, the improvement is made based on any of the above embodiments, the length L₁ of the corner electrode is greater than the average length L₂ of the straight-edge electrodes; and the included angle α of the corner electrode is in the range of 45° ≤ α ≤ 135°; which increases the length of the corner electrode while increases the angle of the corner electrode, the influence of the electric field formed between the interval regions on the corner region is reduced, and the influence of the current conducted between the two sides of the corner electrode on the corner region is reduced. Furthermore, it ensures that the angle of the corner electrode does not affect the wiring of the corner electrode, and also reduces the influence of the current on the corner region.

It can be seen that the problem of excessive field intensity in the corner region can be solved simply by adjusting the angle of the corner electrode, thereby solving the technical problem of premature failure in the corner region; the problem of excessive field intensity in the corner region can also be solved by increasing the length of the corner electrode; and the field intensity of the entire film can be made more balanced by adjusting the angle and length at the same time, which further improves the field intensity balance of the film during use, reduces the possibility of premature failure in the local region of the film, and improves the service life of the film. Since the current on both sides of the corner electrode diffuses in the same conductive layer, and the conductive layer has surface resistance, the electrochromic film 100 has a voltage drop due to the surface resistance of the conductive layer. Therefore, the farther away from the electrode, the smaller the current conduction speed, the smaller the corresponding voltage, and the smaller the corresponding electric field intensity. At this point, by increasing the included angle of the corner electrodes to increase the distance between the two sides of the corner electrode, the point where the current conducted by the straight-edge electrode and the corner electrode overlaps is relatively far from both the straight-edge electrode and the corner electrode. At this point, due to the voltage drop of the conductive layer, the voltage at the overlap point is relatively lower than in other regions, the superimposed electric field intensity is reduced; and the greater the distance, the greater the reduction of the superimposed electric field intensity relative to other regions. This effectively prevents corner failure of the electrochromic film 100, achieving a balance of electric field intensity at various locations in the electrochromic film 100 and increasing the service life of the electrochromic film 100. In other embodiments, by increasing the length of the corner electrodes can also increase the distance between the two ends of the corner electrodes, with the same effect as increasing the angle of the corner electrodes, which will not be elaborated further here. Generally speaking, the smaller the value of α, the greater the influence of the two sides of the corner electrode on the corner region; while the greater the length of the corner electrode, the greater the influence of the electric field of the adjacent interval region on the corner region. That is to say, the smaller the value of α, the greater the corresponding length of the corner electrode; and vice versa. Therefore, the values of α and the length of the corner electrode should be within a reasonable range to ensure that the electric field in the corner region is balanced with that in other regions, preventing the electric field at the corner from being significantly weaker than in other regions and causing uneven electric field intensity across the entire film. For example, if α is greater than 45° but less than 60°, the length of the corner electrode should be greater than twice the length of the straight-edge electrode; if α is greater than 60° but less than 90°, the length of the corner electrode should be greater than 1.5 times but less than twice the length of the straight-edge electrode. If α is greater than 90° but less than 135°, the length of the corner electrode should be greater than 1 times but less than 1.5 times the length of the straight-edge electrode. This embodiment reduces the influence of the distance between the two sides of the corner electrode on the corner region by adjusting the length and angle of the corner electrode, which satisfies the superposition of the influence of two adjacent interval regions on the corner region. This results in a more balanced electric field intensity between the corner region and the non-corner region, preventing premature failure of local regions of the film and affecting its service life.

It is worth noting that the influence range of the electric field formed in the interval region is related to the applied voltage and current. For the same busbar in the same electrochromic film 100, when the resistance of the entire busbar is uniform and small, the voltage and current of the entire busbar are basically the same. At this time, the electric field intensity formed in the interval region is related to the length of the interval region and the length of the electrode. In general, the influence range of the electric field intensity in the interval region is positively correlated with the length of the electrode. Generally, the influence range of the electric field is smaller than the length of the electrode.

Therefore, the longer the corner electrode length is set, the farther the electric field overlap is from the center of the electric field, and the electric field of a single electric field in the overlap region is much smaller. Therefore, the superposition of the two electric fields will not be too large and will be close to the intensity of a single electric field. Thus, the electric field intensity of the entire electrochromic film 100 is balanced, and the premature failure of the corner portion of the electrochromic film 100 is avoided.

Optionally, further improvements are made based on any of the above embodiments. L₁ and L₂ satisfy the condition that L₂ < L₁ < 4 × L₂, that is, the length of the corner electrode 110 is 1 to 4 times the average length of the straight-side electrodes 120. Optionally, the length of the corner electrode 110 is 1 to 2 times the average length of the straight-side electrodes 120. Optionally, the difference between L₁ and L₂ is greater than 20% of the L₂. Specifically, the length of the corner electrode is equal to the sum of the length of the first side and the length of the second side of the corner electrode. Since there is an included angle α between the first side and the second side of the corner electrode, when the length of the corner electrode is constant, the smaller the value of α, the shorter the distance between the two ends of the corner electrode; and the larger the value of α, the longer the distance between the two ends of the corner electrode. When the value of α is constant, such as in some devices where the corner of the film is limited and it is not suitable to arrange corner electrodes with large angles, the length L₁ of the corner electrode can be increased to further increase the distance between the two ends of the corner electrode 110, thereby increasing the distance between the two adjacent interval regions of the corner electrode. This reduces the influence of the adjacent interval regions to the corner electrode on the corner region, ensuring that the difference in electric field intensity between the corner region and other regions of the electrochromic film 100 is within a preset range. This improves the balance of electric field intensity between the edge portion 800 and the central portion 300 of the electrochromic film 100, preventing premature failure of the corner portion of the electrochromic film 100 and thus improving the service life of the film.

In addition, the specific ratio between the straight-edge electrode 120 and the corner electrode 110 can be adjusted according to the material and the size of the electrochromic film 100 to improve the balance of electric field intensity between the corner portion and the straight-edge portion of the electrochromic film 100, thereby improving the overall balance of electric field intensity of the electrochromic film 100.

Optionally, in some embodiments of the present application, the straight-line distance between the two ends of the corner electrode is L. L and L₂ satisfy: L₂ < L. Optionally, L and L₂ satisfy: L₂ < L < 4 × L₂, and optionally, L = 2 × L₂. Optionally, the sum of the lengths of the first side and the second side is equal to 2 times L₂. Optionally, the lengths of the first side and the second side are equal. That is, the first side and the second side are both equal to the average length of the straight-edge electrodes; the inventors have found that when the first side and the second side are equal to the average length of the straight-edge electrodes, when a certain voltage is applied to the film, the electric field intensity in the corner region is balanced with the electric field intensity in the interval region, or the error is within a certain range. Specifically, increasing the distance L between the two ends of the corner electrode can be achieved by at least one of the following methods: when the length L₁ and the included angle α of the corner electrode are constant, increasing the length of the first or second side of the corner electrode; when the length L₁ of the corner electrode is constant, increasing the angle α of the corner electrode and/or increasing the length of the first or second side of the corner electrode; when the included angle α of the corner electrode is constant, increasing the length L₁ of the corner electrode and/or increasing the length of the first or second side of the corner electrode; or increasing the length L₁ of the corner electrode while simultaneously increasing the included angle α of the corner electrode.

Since both ends of the corner electrode are adjacent to the interval region, respectively, when the corner electrode 110 and the straight-edge electrode 120 disposed on the electrochromic film 100 are electrically connected to the external power supply, the current of the external power supply is conducted through the corner electrode and the straight-edge electrode to the central portion 300 of the electrochromic film 100 and the interval region disposed on the electrochromic film 100. Since the current has a voltage drop due to the surface resistance of the conductive layer during the conduction process, the farther away from the corner electrode, the smaller the conduction speed and the smaller the corresponding voltage. The current conducted to the interval region is conducted and diffused to the surrounding region with the interval region as the center. Therefore, by increasing the distance between the two ends of the corner electrode, the current in the interval region at both ends of the corner electrode diffuses to the overlapping point in the corner portion (the overlapping point refers to the region where the current in the interval region overlaps in the corner portion during the current diffusion process at both ends of the corner electrode), thereby avoiding excessive superimposed current in the corner portion, thus avoiding overcharging and over-discharging of the corner region of the electrochromic film 100, and enabling the electrochromic layer 170 in the corner portion to change color uniformly with other regions, thereby effectively preventing corner failure of the electrochromic film 100. Optionally, the value of L is in the range of 1-2 times L₂.

As shown in FIGS. 2 and 3, in some embodiments of the present application, a first interval region 130 is formed between the corner electrode 110 and the adjacent straight-edge electrode 120, and the length of the first interval region 130 is L₃. The interval regions adjacent to the two ends of the corner electrode in any of the above embodiments are the first interval region 130 in this embodiment. The length of the first interval region 130 refers to the distance between the two ends of the first interval region 130 in the extending direction of the straight-edge portion 800 of the electrochromic film 100.

Meanwhile, a second interval region 140 is provided between adjacent straight-edge electrodes 120, and the length of the second interval region 140 is L₄. The length of the second interval region 140 refers to the distance between the two ends of the second interval region 140 in the extending direction of the straight-edge portion 800 of the electrochromic film 100.

L₄≤L₃, that is, the length of the first interval region 130 is greater than or equal to the length of the second interval region 140. The distance of the first interval region 130 affects the intensity of the generated electric field at that location. Generally speaking, the larger the length of the first interval region 130, the smaller the corresponding electric field intensity, which is equivalent to reducing the electric field at that location, and further reducing the influence of two adjacent electric fields on the corner region. Furthermore, by increasing the length of the first interval region 130, the distance from the straight-edge electrodes adjacent to tow ends of the corner electrode to the corner electrode is increased. This increases the distance the current conducted to the straight-edge electrodes diffuses towards the corner electrodes. Since a voltage drop occurs due to the surface resistance of the conductive layer during current diffusion, the conduction speed decreases and the corresponding voltage decreases with increasing distance from the electrode. This means the superimposed current formed by the current diffused from the adjacent straight-edge electrodes at both ends of the corner electrode to the corner electrode is smaller, thus reducing the current at the corner electrode and effectively preventing corner failure of the electrochromic film 100. Additionally, since the length of the first interval region 130 is not less than the length of the second interval region 140, the electric field intensity generated by the second interval region 140 can be increased by decreasing the length of the second interval region 140. This ensures that the electric field intensity in the corner region after the electric fields of two adjacent first interval regions 130 overlap is less than or close to the electric field intensity generated by the second interval region 140, thereby mitigating the possibility of corner or localized failure and increasing the service life of the electrochromic film 100. Furthermore, by increasing the length of the first interval region 130, the electric field intensity generated by the first interval region 130 is reduced. Therefore, the electric field intensity diffused from the first interval region 130 is also reduced, thereby the superimposed electric field intensity of the first interval region 130 located on both sides of the corner region in the corner region is lowered. This mitigates the possibility of corner region failure and improves the uniformity of the electric field intensity at the edge portion 800 of the electrochromic film 100.

In some embodiments of the present application, when the busbar 200 is electrically connected to an external power source, the current from the external power source is conducted through the busbar 200 to the interval region between the corner electrode 110 and the straight-edge electrode 120, forming an electric field between the positive and negative electrodes of two adjacent electrodes. This electric field forms a superimposed new electric field in the corner region. At this time, the electric field in the corner region is E₁, and the electric field in the non-corner region is E₂. It should be noted that the electric field E₂ in the non-corner region here refers to the electric field intensity E₂ during the charging process in the non-corner region. After charging is completed, the field intensity at each point should be uniform and the transmittance should also be uniform. The non-corner region refers to the region of the central portion 300 excluding the corner portion.

When the electrochromic film 100 is charged and discharged, the region corresponding to the corner electrode in the electrochromic film 100 is the corner region, and the maximum electric field intensity in the corner region is E₁ₘₐₓ. The electric field in the non-corner region of the electrochromic film 100 is E₂. The non-corner region is the region of the central portion 300 of the electrochromic film 100 excluding the corner region; in which, E₁ₘₐₓ < E₂ or the difference between E₁ₘₐₓ and E₂ is within a preset range. Optionally, the difference between E₁ₘₐₓ and E₂ is within a preset range. Optionally, the absolute value of the difference between E₁ₘₐₓ and E₂ ranges from 10% of E₂ to 30% of E₂, preferably 20% of E₂. In addition, E₁ₘₐₓ refers to the maximum electric field intensity in the corner region when the busbar 200 is powered by the busbar connected to an external power source.

Specifically, by keeping the difference between the strongest electric field E₁ₘₐₓ in the corner region and the electric field intensity E₂ in the non-corner region within a preset range, the difference between the electric field intensity in the corner region and the electric field intensity in the non-corner region is reduced, thus preventing premature aging of the conductive layer in the corner region or premature failure of the electrochromic layer 170 due to overcharging and over-discharging. Furthermore, keeping the difference between E₁ₘₐₓ and the electric field intensity E₂ in the non-corner region within a preset range can improve the balance of electric field intensity between the corner region and the non-corner region in the electrochromic film 100, thereby improving the stability and service life of the electrochromic film 100.

The electric field intensity in the interval region is related to the length of the interval region and the length of the electrode. Generally, the range of electric field influence is positively correlated with the length of the interval region.

By controlling the intensity of the superimposed electric field in the corner region of the electrochromic film 100 from the electric fields in the interval regions, the electric field intensity in the corner region of the electrochromic film 100 is reduced, preventing the superposition electric field in the corner region from being greater than the electric field intensity in the non-corner region. This balances the electric field intensity of the entire film and reduces premature corner failure.

As shown in FIGS. 1, 6, and 15, in some embodiments of the present application, when the electrochromic film 100 is electrically connected to an external power source, that is, when the electrochromic film 100 is charged and discharged, the maximum electric field intensity in the corner region corresponding to the corner electrode 110 is E₃ₘₐₓ, and the minimum electric field intensity in the edge portion 800 is E₄ₘᵢₙ. It should be noted that since the lengths of the two sides of the corner electrode 110 are equal, the distances from the two ends of the corner electrode 110 to the angle bisector of the corner electrode are equal, meaning that the maximum superimposed electric field in the corner region lies on the angle bisector of the corner electrode 110; E₃ₘₐₓ < E₄ₘᵢₙ or the difference between E₃ₘₐₓ and E₄ₘᵢₙ is within a preset range. Optionally, the absolute value of the difference between E₃ₘₐₓ and E₄ₘᵢₙ is in the range of 10% of E₄ₘᵢₙ to 30% of E₄ₘᵢₙ, preferably 20% of E₄ₘᵢₙ. The E₃ₘₐₓ refers to the maximum electric field in the corner region corresponding to the corner electrode, which can be the maximum electric field intensity during charging and discharging, or the electric field at the point with the maximum field intensity in the corner region. The E₄ₘᵢₙ refers to the minimum electric field among the electric field intensities at various points in the edge portion 800 during the charging and discharging process when the straight-edge electrode and the corner electrode are electrically connected to the external power supply. Since the minimum electric field of the edge portion 800 is greater than the maximum electric field of the corner region, the electric field intensity of the corner region is less than that of the edge portion 800, thereby reducing the field intensity of the electrochromic film 100 in the corner region and alleviating corner region failure. Furthermore, the difference between the field intensity of the edge portion 800 and the electric field of the corner region can be adjusted to avoid excessively high electric field intensity in the corner region, which could lead to overcharging and over-discharging of the corresponding electrochromic layer 170 and premature failure.

Additionally, in the two adjacent sides of the corner region, the field intensity at the overlapping point of the two adjacent first interval regions 130 in the corner region is E₅. Specifically, the two adjacent first interval regions 130 form a superimposed electric field in the corner region, and this superimposed electric field is E₅. The electric field generated by the second interval region 140 is E₆, where E₅ < E₆ or the difference between E₅ and E₆ is within a preset range. Optionally, the absolute value of the difference between E₅ and E₆ ranges from 10% of E₆ to 30% of E₆, preferably 20% of E₆. By setting the difference between E₅ and E₆ within a preset range, a large difference between the superimposed electric field intensity of the first interval region 130 in the corner region and the electric field intensity of the second interval region 140 is avoided, which would cause premature aging of the conductive layer in the corner region. This improves the uniformity of the electric field intensity between the corner region and the second interval region 140 in the electrochromic film 100, thereby enhancing the stability of the electrochromic film 100.

Optionally, the improvement is made based on any of the above embodiments, the straight-line distance (distance between the two ends of the corner electrode) between two adjacent first interval regions 130 is greater than or equal to the influence range of the electric field of the first interval region 130, preferably greater than twice. The influence range refers to the length from the center of the electric field to the point where the electric field has the minimum influence. Generally, the superimposed electric field intensity of two electric fields is greatest at half the influence range. Therefore, when the length of two adjacent first interval regions 130 is greater than the electric field influence range of the first interval region 130, the region where the electric fields of the two first interval regions 130 overlap is far from the half-influence range. Since the electric field weakens from the center outwards, the field intensity at the superimposed region is less than the intensity of a single electric field, thus effectively reducing the field intensity in the corner region. For example, the field intensity of two adjacent first interval regions 130 is equal, both are E₁, and their influence range is 10 cm. In this case, if the distance between the two ends of the corner electrode is also 10 cm, and the two sides of the corner electrode are equal, then the superimposed field intensity of the two adjacent first interval regions 130 is strongest at 5 cm from the first interval region 130. The field intensity of a single electric field at 5 cm is 1/2E₁, and the field intensity at the superimposed region is E₁, equal to the field intensity of a single first interval region 130. If the distance between the two ends of the corner electrode is greater than 10 cm, the electric fields of the two first interval regions 130 will superimpose at the location beyond 5 cm. At this time, the field intensity of a single first interval region 130 at that location beyond 5 cm is less than 1/2E₁. Therefore, at that location the superimposed field intensity of the two electric fields, each less than 1/2E₁, is less than E₁, thereby reducing the field intensity at this location. This effectively reduces the aging rate of the conductive layer at this location and reduces the overcharging and over-discharging of the electrochromic layer 170, thus preventing failure in the corner region of the film.

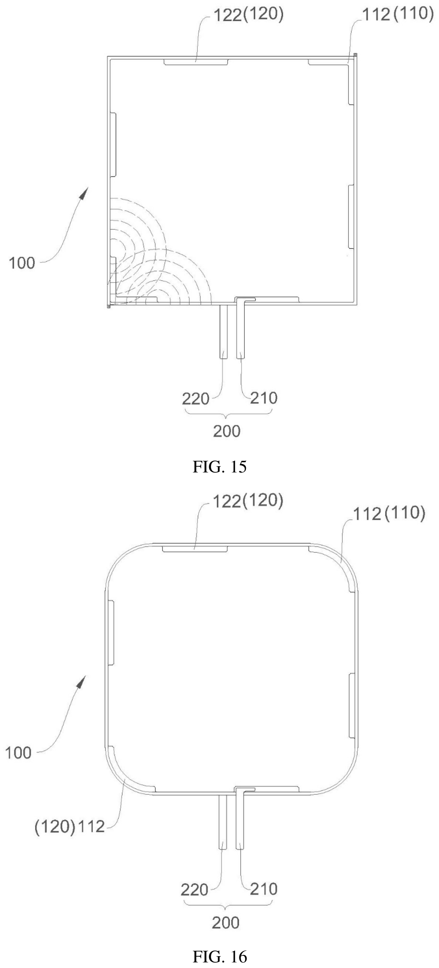

Specifically, as shown in FIG. 15, which shows the field intensity distribution in one corner region. The dashed lines in the figure represent the influence of the electric field lines generated by the first interval regions 130 at both ends of the corner electrode. The overlapping and intersecting portion of the dashed lines are the superposition region of the electric fields in the two first interval regions 130 in the corner region. This region is stronger than a single electric field due to the superposition of the field intensity. Furthermore, the influence of the electric field intensity generated by the second interval region 140 is the same as that of the electric field intensity generated by the first interval region 130.

As shown in FIGS. 2, 3, and 10, in some embodiments of the present application, the edge portion 800 of the electrochromic film 100 is provided with first grooves 400 and second grooves 500 arranged at intervals. The number of first grooves 400 and second grooves 500 can be one, two, or more, which can be set according to the specific circumstances. In this embodiment, the first grooves 400 and second grooves 500 are alternately provided on each side of the electrochromic film 100, and all the first grooves 400 and second grooves 500 are alternately distributed circumferentially across the entire edge portion 800, and a gap is formed between adjacent first grooves 400 and second grooves 500.

The busbar 200 includes a first busbar 210 and a second busbar 220, and the first busbar 210 and the second busbar 220 are respectively disposed on both sides of the electrochromic edge thickness direction.

The corner electrode 110 includes a first corner electrode 111 and a second corner electrode 112 with opposite polarities. The opposite polarities refer to the first corner electrode 111 being connected to the negative electrode of an external power supply, and the second corner electrode 112 being configured to be connected to the positive electrode of the external power supply; or the first corner electrode 111 being connected to the positive electrode of the external power supply, and the second corner electrode 112 being configured to be connected to the negative electrode of the external power supply. The straight-edge electrode 120 includes a first straight-edge electrode 121 and a second straight-edge electrode 122 with opposite polarities. The opposite polarities refer to the first straight-edge electrode 121 being connected to the negative electrode of an external power supply, and the second straight-edge electrode 122 being connected to the positive electrode of the external power supply; or the first straight-edge electrode 121 being connected to the positive electrode of the external power supply, and the second straight-edge electrode 122 being connected to the negative electrode of the external power supply; and the first corner electrode 111 and the first straight-edge electrode 121 are electrodes of the same polarity, that is, located in the same conductive layer, and the second corner electrode 112 and the second straight-edge electrode 122 are electrodes of the same polarity.

As shown in FIG. 3, the first groove 400 penetrates the first substrate layer 150, the first conductive layer 160, and the electrochromic layer 170 along the thickness direction of the electrochromic film 100 to expose a portion of the second conductive layer 180, to form the first corner electrode 111 and the first straight-edge electrode 121. Specifically, when the first groove 400 is provided at the corner portion of the edge portion 800, the first corner electrode 111 is formed at the corner portion; when the first groove 400 is provided at the straight-edge of the edge portion 800, the first straight-edge electrode 121 is formed at the straight-edge portion. The first busbar 210 is attached along the edge of the electrochromic film 100, covering the first corner electrode 111 and the first straight-edge electrode 121, and is electrically connected to the first corner electrode 111 and the first straight-edge electrode 121. That is, the first busbar 210 is directly opposite the first groove 400 and forms an electrical connection with the second conductive layer 180 exposed in the first groove 400, thereby electrically connecting the second conductive layer 180 to an external power source through the first busbar 210.

Furthermore, the second groove 500 penetrates the second substrate layer 190, the second conductive layer 180, and the electrochromic layer 170 along the thickness direction of the electrochromic film 100 to expose a portion of the first conductive layer 160, to form the second corner electrode 112 and the second straight-edge electrode 122. Specifically, when the second groove 500 is located at the corner portion of the edge portion 800, a second corner electrode 112 is formed at the corner portion; when the second groove 500 is located at the straight-edge portion of the edge portion 800, a second straight-edge electrode 122 is formed at the straight-edge portion. The second busbar 220 is located on the side of the electrochromic film opposite to the first busbar 210, and is attached along the edge portion 800 of the electrochromic film 100 and electrically connected to the second corner electrode 112 and the second straight-edge electrode 122. That is, the second busbar 220 is directly opposite the second groove 500 and electrically connected to the first conductive layer 160 exposed in the second groove 500, thereby electrically connecting the first conductive layer 160 to an external power source through the second busbar 220.

In this embodiment of the present application, by alternately arranging the first groove 400 and the second groove 500 at the edge of the electrochromic film 100, that is, by forming the first straight-edge electrode 121 and the second straight-edge electrode 122 alternately at intervals on the straight-edge portion 800. The first corner electrode 111 and second corner electrode 112 are alternately formed at the corner portion of the edge portion 800, that is, the corner electrodes at adjacent corner portions of the edge portion 800 are different. The first corner electrode 111 and the first straight-edge electrode 121 are connected to the positive electrode of an external power supply through the first busbar 210, and the second corner electrode 112 and the second straight-edge electrode 122 are connected to the negative electrode of an external power supply through the second busbar 220, so that the electrochromic film 100 is electrically connected to the external power supply. At the same time, a multi-electrode structure is formed on the edge portion 800 of the electrochromic film 100, so that the external power supply can be conducted from multiple circumferential positions on the edge portion 800 of the conductive layer of the electrochromic film 100 to the central portion 300 of the conductive layer. The current diffuses from the periphery inward, which improves the electron conduction speed of the entire film, thereby improving the color-changing speed of the electrochromic film 100. Furthermore, since the first busbar 210 and the second busbar 220 are respectively disposed on both sides of the thickness direction of the edge portion 800 of the electrochromic film 100, the first busbar 210 and the second busbar 220 will not experience contact short circuits, thereby improving the stability and safety of the connection between the electrochromic film 100 and the external power supply.

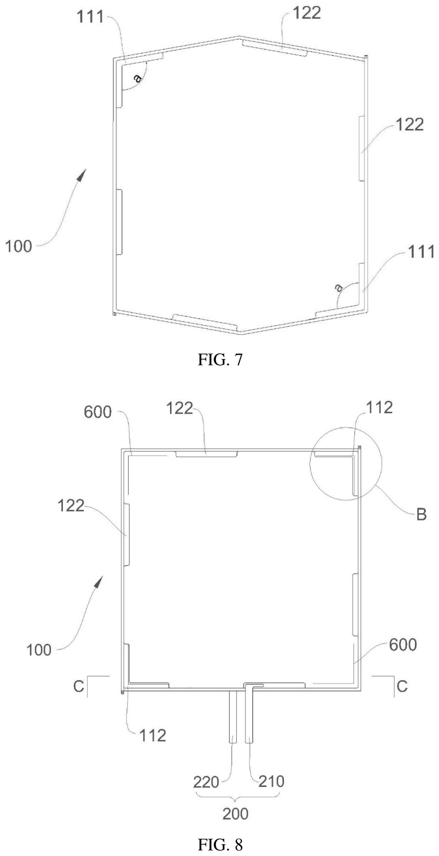

As shown in FIGS. 8, 9, and 11, in some embodiments of the present application, the corner electrode 110 includes a first side and a second side, the length of the first side is D₁ and the length of the second side is D₂, and D₂ ≤ D₁. The arc shape protrudes towards the corner portion.

It can be understood that when the lengths of the two sides of the electrochromic film 100 are equal, or the length of the first side is greater than the length of the second side, the larger side extends towards the longer side of the film, and the specific length can be specifically set according to the actual size of the film. With the total length of the corner electrode remaining constant, the electrodes are set with different side lengths according to the shape of the film, so that the lengths of the two ends of the corner electrode are adapted to the shape of the film, so that the entire film structure is more compact, and at the same time ensuring that the corners are not prone to premature failure; in addition, the design with one side longer than the other is matched with the shape of the film, so that there is sufficient space to set the straight-edge electrodes on each straight-edge portion of the film. In the embodiments of the present application, as the length of the first side gradually increases, the length of the second side gradually decreases; at this time, the distance between the two ends of the corner electrode gradually increases, that is, the distance between the two interval regions adjacent to the corner electrode gradually increases, thereby reducing the superposition effect of the current in the two interval regions during the diffusion process at the corner, thereby avoiding premature failure of the corner portion of the electrochromic film 100.

Some embodiments of the present application are improved based on any of the above embodiments. As shown in FIG. 16, the length of the edge portion 800 is D, and the length of the edge portion 800 refers to the perimeter of the edge portion 800; as shown in FIG. 16, the corner electrode is arc-shaped, and the radius of the corner electrode is N. The value of N is 1/9×D≤N. For example, if the included angle between two sides is 90°, the corner electrode is a right-angled arc formed by drawing a 90° circle with radius N. If the included angle between the two sides is 135°, the corner electrode is a 135° arc formed by drawing a 90° circle with radius N. In this embodiment, the corner electrode protrudes towards the corner portion, that is, the arc-shaped corner electrode protrudes away from the central portion 300 of the film. In this embodiment, while ensuring that the distance between the two ends of the corner electrode is equal, setting the corner electrode to an arc shape is equivalent to increasing the distance from the two sides of the arc-shaped electrode to the point where the two electric fields of the adjacent first interval region 130 overlap, thereby reducing the influence of the current of the corner electrode on the point where the two electric fields of the adjacent first interval region 130 overlap, thus reducing the electric field intensity at that point and preventing corner failure. In addition, generally speaking, the corner of the corner region is most prone to failure. The present application sets the electrode to an arc shape, which is equivalent to bypassing the original corner, so that the corner of the film is an arc shape, and providing a larger space for current conduction, thereby reducing the superposition intensity of the electric fields. Correspondingly, the groove corresponding to the arc-shaped corner electrode is also arc-shaped. For example, the corresponding radius is different for films of different sizes. Generally speaking, in a device with a side length of 260 mm × 260 mm, the shape of the corner electrode is an arc with a radius of 30 mm and an angle of 90°. By making the side length meet the ratio of the radius, the length of the corner electrode is within a certain range, which can both prevent corner failure and ensure the color-changing speed of the electrochromic film 100.

It is understood that the arc length of the corner electrode can also be increased by increasing the radius of the arc. Specifically, the arc length of the corner electrode is equal to the length L₁ of the corner electrode. By increasing the arc length, the length of both ends of the corner electrode is increased, thereby increasing the distance between the first interval regions 130 adjacent to the two ends of the corner electrode. This reduces the superimposed current at the corner electrode when the current in the first interval regions 130 diffuses to the corner electrode, thus effectively preventing the electric field intensity of the corner electrode from being too high and improving the uniformity of the electric field intensity at the edge portion 800 of the electrochromic film 100.

Optionally, in some embodiments of the present application, the included angle α of the arc-shaped corner electrode 110 is not less than 100°, that is, an arc with a radius of N and an angle of 100° is drawn to form the corner electrode. With a constant length of the corner electrode 110, the electrode is set without affecting the entire edge of the film, and the color-changing speed of the electrochromic film 100 is also not affected. That is, without changing the length of the corner electrode, by increasing the included angle of the corner electrode 110, the distance between the two first interval regions 130 adjacent to the corner electrode 110 is increased, thereby increasing the superposition distance of the electric fields of the two first interval regions 130 adjacent to the corner electrode 110 at the corner electrode 110, and the superposition electric field intensity of the electric fields of the two adjacent first interval regions 130 at the corner electrode 11 is reduced. Furthermore, by increasing the angle of the corner electrode, the distance between the two sides of the corner electrode is increased, thereby also increasing the current conduction path on both sides. Therefore, the superposition effect of the current at the overlapping point on both sides is reduced, and the risk of corner failure of the electrochromic film 100 is reduced.

As shown in FIGS. 8 and 9, optionally, an improvement is made based on any of the above embodiments, by providing a blocking portion at the corresponding corner electrode, the blocking portion extends along the extension direction of the corner electrode. The blocking portion blocks or reduces the current conduction from the conductive layer of the blocking portion to the conductive layer of the central portion 300. In this embodiment, blocking or reducing current means that the current will not be directly conducted from the blocking portion to the conductive layer of the central portion 300. Reducing current means that the current conducted from the busbar through the blocking portion to the conductive layer of the central portion 300 is less than the current of the busbar. It should be noted that the shape of the portion of the edge portion 800 provided with the blocking portion includes at least one of the following: linear, planar, graphic, polygonal, or pseudo-shape. The inventors have found that the regions where the electrochromic film 100 is prone to failure include at least the regions with low surface resistance. Because the surface resistance of this region is lower, when current is applied to the busbar at a certain voltage, the current transmitted from the region with low surface resistance to the central region is usually greater than the current from the region with high surface resistance. Therefore, the conductive layer of the region with low surface resistance will be in a high-current environment for a long time, which on the one hand causes the conductive layer of this region to age, and on the other hand causes the electrochromic layer 170 of this region to be overcharged or over-discharged, thus causing this region to fail earlier than other regions. By setting the blocking portion in regions of the electrochromic film 100 with lower surface resistance, such as busbar overlaps, corners of the electrochromic film 100, and regions with lower resistivity on the conductive surface, the current transmitted from these regions to the central portion 300 is blocked or reduced. This ensures that the current in the lower surface resistance region is close to the current in the higher surface resistance region, thereby slowing down corner failure.

Optionally, an improvement is made based on any of the above embodiments, the blocking portion includes an etched region after etching a portion of the conductive layer and/or a filler with a resistance greater than that of the busbar.

Optionally, an improvement is made based on any of the above embodiments, the length of the first side of the corner electrode 110 is greater than that of the second side, and a blocking portion is provided on the second side of the corner electrode 110. The blocking portion blocks or reduces the current of the busbar 200 from the second side of the corner electrode to the central portion 300 of the electrochromic film 100. The blocking portion at least penetrates the conductive layer of the edge portion 800 that contacts the busbar, and is located on the side of the busbar 200 near the central portion 300 of the electrochromic film 100. In the embodiment of the present application, a blocking portion is provided on the shorter side of the corner electrode to effectively prevent current from one side from conducting to the corner region, while the other corner electrode conducts current normally. With only one side conducting current, the current magnitude in the corner region is reduced, thereby reducing the electric field intensity in that region and effectively preventing corner failure. Simultaneously, since the longer side can still conduct current normally, the corner region can also change color normally, thus improving the color-changing speed of the electrochromic device. This is particularly significant for large-area devices, where it can significantly improve the color-changing speed of the electrochromic film 100.

Optionally, further improvements are made based on any of the above embodiments, as shown in FIGS. 8 to 10, a blocking portion is provided at the edge corner of the electrochromic film 100. The blocking portion includes, but is not limited to, at least one of the following implementation methods: the blocking portion penetrates through the first conductive layer 160 and the second conductive layer 180, the blocking portion penetrates through a portion of the first conductive layer 160, the blocking portion penetrates through a portion of the second conductive layer 180, an insulating or high-resistance blocking portion is disposed between the second busbar 220 and the first conductive layer 160, or an insulating or high-resistance blocking portion is disposed between the first busbar 210 and the second conductive layer 180. The high-resistance blocking portion refers to a blocking portion whose resistance is not less than the resistance of the busbar. The insulating or high-resistance blocking portion can be any of the following: insulating high-temperature adhesive, insulating glue, or a high-resistance conductor. Alternatively, it can utilize the first substrate layer 150 and/or the second substrate layer 190 to prevent contact between the busbar and the conductive layers, that is, there is no electrodes being placed at the corners. The busbar can be directly attached to the edge of the electrochromic film 100 onto the first substrate layer 150 and/or the second substrate layer 190. The blocking portion blocks or reduces the current from the corner electrode 110 to the central portion 300 of the electrochromic film 100. The blocking portion at least penetrates the conductive layer in contact with the busbar 200 at the edge portion 800 and is located on the side of the busbar 200 closer to the central portion 300.

When the electrochromic film 100 is an irregular film, such as when some corner regions are small, the angle between the corner electrodes cannot be set too large, especially when the value of α is 45°≤α≤90°, or even less than 45°. In this case, the current at that point can be blocked by setting a blocking portion to prevent it from being directly conducted to the corner region, thereby reducing the possibility that the corner region will fail due to the large influence of the electric field. Specifically, as shown in FIGS. 8 and 9, the first corner electrode 111 and the second corner electrode 112 are respectively provided with blocking portions. In the embodiment of the present application, the electrochromic film 100 includes four sides connected end to end in sequence; the first corner electrode 111 and the second corner electrode 112 are respectively located at the corner formed by two adjacent sides. That is, a part of the corner electrode 110 is arranged at the end of one side of the film, and the other part is arranged at the end of the other adjacent side. Several first straight-edge electrodes 121 and second straight-edge electrodes 122 are alternately arranged on each side. The number of first straight-edge electrodes 121 and second straight-edge electrodes 122 is set according to the length of each side of the electrochromic film 100 required. If the lengths of each side of the electrochromic film 100 are relatively short, the first straight-edge electrode 121 and the second straight-edge electrode 122 can be arranged on the same side respectively. Optionally, taking the first corner electrode 111 as an example, two sides of the first corner electrode 111 are arranged alternately as the second straight-edge electrode 122, the first straight-edge electrode 121, the second straight-edge electrode 122, the first straight-edge electrode 121, and so on. Conversely, taking the second corner electrode 112 as an example, two sides of the second corner electrode 112 are arranged alternately as the first straight-edge electrode 121, the second straight-edge electrode 122, the first straight-edge electrode 121, the second straight-edge electrode 122, and so on. In the embodiment of the present application, when the first busbar 210 is attached to one side of the electrochromic film 100 in the thickness direction, both the first corner electrode 111 and the first straight-edge electrode 121 are electrically connected to an external power source through the first busbar 210. Since the blocking portion is provided at the first corner electrode 111 in this embodiment of the present application, when the value of α is in the range of 45°≤α≤90°, the two sides of the corner electrode are relatively close, and the current conduction from the two sides to the corner region causes a significant impact. Therefore, a blocking portion is provided to block or reduce the current conducted from the first corner electrode 111 to the central portion 300 of the electrochromic film 100. However, there is no blocking portion being provided at the first straight-edge electrode 121. Current is conducted from the first straight-edge electrode 121 to the central portion 300 of the second conductive layer 180. At the beginning of being powered on, the current at the first corner electrode 111 corresponding to the first conductive layer 160 of the electrochromic film 100 is smaller than or zero compared to the current at the straight-edge electrode, thus the electric field intensity at the first corner electrode 111 is reduced. The electric field formed by the entire film is not concentrated at the corner, but rather dispersed along the straight-edges of the edge, so as to achieve a more balanced electric field intensity across the corner portion, the edge portion, and the central portions 300 of the electrochromic film 100. This prevents premature aging and failure of the electrochromic film 100 at the corners, and the stability and durability of the electrochromic film 100 are improved. After a period of energized, i.e., after being charged with a preset amount of electricity, the current in the central portion 300 of the first conductive layer 160 diffuses towards the corners of the conductive layer, eventually reaching equilibrium, so that a uniform color-changing across the entire electrochromic film 100 is realized. Correspondingly, the blocking portion is provided on the second corner electrode 112 in the same manner as that provided on the first corner electrode 111, and will not be described again here. Since the current is conducted from the busbar 200 to the edge portion 800 of the conductive layer and then to the central portion 300 of the conductive layer, the embodiment of the present application provides a blocking portion at the corner electrode 110 to block the current of the busbar 200 from the edge portion 800 of the conductive layer to the central portion 300 of the conductive layer of the electrochromic film 100. This reduces the current at the corner of the electrochromic film 100 and prevents the electrochromic layer 170 at the corner from being in an overcharged and over-discharged state for a long time, thus preventing premature failure. In addition, by reducing the current at the corner, the electric field intensity at the corner is reduced, so as to achieve a balance between the electric field intensity in the corner region and the non-corner region of the edge portion 800 of the electrochromic film 100, avoiding the phenomenon of corner or local aging failure of the entire electrochromic film 100, and further improving the stability and durability of the electrochromic film 100.

Optionally, as shown in FIGS. 8 and 9, in some embodiments of the present application, the blocking portion includes a first blocking portion 600 and a second blocking portion 700. In embodiments of the present application, the first corner electrode 111 is correspondingly provided with the first blocking portion 600, and the second corner electrode 112 is correspondingly provided with the second blocking portion 700. Both the first blocking portion 600 and the second blocking portion 700 are located on the side of the first busbar 210 near the central portion 300. By providing a blocking portion penetrating the corresponding conductive layer at each corner electrode 110, the structure is simpler, more compact, and symmetrical. The thickness of the film will not be locally excessive, affecting the lamination quality. Furthermore, the manufacturing process is simple; only the depth data of the first groove 400 or the second groove 500 at the corresponding corner needs to be changed when cutting the first groove 400 and the second groove 500.

In some embodiments of the present application, the first blocking portion 600 corresponds to the first corner electrode 111 penetrating at least through the conductive layer in contact with the busbar along the thickness direction of the electrochromic film 100. The first corner electrode 111 is exposed in the second conductive layer 180 after penetrating the first substrate, the first conductive layer 160, and the electrochromic layer 170 through the first groove 400. At this time, since the first groove 400 has been etched at the corner after the electrode is formed by cutting, it is only necessary to cut the blocking portion based on the first groove 400. This setting ensures that current can be effectively prevented from being conducted from the first blocking portion 600 to the conductive layer at the corner. In addition, the film production process is simple and the laser cutting process has low cost, which has the advantages of saving time and cost. In other optional embodiments, the depth data of the first groove 400 at the corner can be directly modified when cutting the first groove 400 at the corner, such as setting the first groove 400 at the corner to penetrate through the first substrate, the first conductive layer 160, the electrochromic layer 170, and the second conductive layer 180. The first blocking portion 600 can be formed at any position between the edge of the first groove 400 and the busbar; in other embodiments, the first blocking portion 600 can also be disposed on the side of the groove near the central position, such as by infrared light passing through the second substrate and acting on the second conductive layer 180 at the corresponding position, or by laser cutting through the second substrate and the second conductive layer 180. The method for forming the corresponding second blocking portion 700 through the corresponding second corner electrode 112 and at least through the first conductive layer 160 in the thickness direction of the electrochromic film 100 can refer to any of the above-described methods for forming the first blocking portion 600, which will not be described in detail here.

It is worth noting that the various features described above in the present application can be arbitrarily combined to form new technical solutions.

As shown in FIG. 16, some embodiments of the present application also provide a color-changing device, including a substrate layer 900 and an electrochromic film 100 as described in any of the above embodiments, which is stacked with the substrate layer 900.

Specifically, the substrate layer 900 is a transparent structure. For example, the substrate layer 900 can be a transparent glass, a transparent acrylic sheet, or a transparent PVC sheet, etc. Optionally, the substrate layer 900 is a glass, and two layers of the substrate layer 900 are provided. Alternatively, the electrochromic film 100 can be sandwiched between the two substrate layers 900. An adhesive such as PVB or OCA is provided between the electrochromic film 100 and the substrate layer 900. The edges of the electrochromic film 100 are sealed with sealant at the outer periphery of the electrochromic film 100, and the two substrate layers 900 are connected by the sealant to form a sealed color-changing device. The sealant is a transparent insulating colloid, such as PVB (Polyvinyl Butyral) or OCA (Optically Clear Adhesive).

Furthermore, the sealant not only forms an adhesive between the two substrate layers 900 and the electrochromic film 100, but also seals the electrochromic film 100 to prevent it from contacting external moisture and oxygen, thereby improving the service life of the electrochromic film 100 and the service life of the color-changing device.

Additionally, a shielding layer 1000 is provided on the surface of the substrate layer 900 corresponding to the edge portion 800 of the electrochromic film 100. The shielding layer 1000 can be provided on the inner or outer surface of the substrate layer 900; the shielding layer 1000 can be made of shielding materials such as metal or black ink. In order to prevent users from directly observing the edge portion 800 of the electrochromic film 100 through the transparent substrate layer 900 to improve the overall appearance of the film, the shielding layer 1000 is provided at the edge of the substrate layer 900, and the shielding layer 1000 obstructs the busbar 200 and the blocking portion at the edge of the electrochromic film 100, thereby enhancing the aesthetics of the color-changing device. Furthermore, the width of the shielding layer 1000 is greater than the width of the edge portion 800. Generally, the width of the shielding layer 1000 extends from the outer edge of the film towards the central region, exceeding the edge portion 800. Optionally, the shielding layer 1000 extends 10 mm to 20 mm beyond the width of the corner electrode. Since the edge portion 800 may fail earlier due to prolonged use, the shielding layer 1000 not only covers the edge portion 800 but also covers potentially failing regions, preventing users from directly observing the failure region and affecting their vision.

The present application also provides a vehicle including an electrochromic film 100 and a controller as described in any of the preceding embodiments. The electrochromic film 100 can be applied to one of the laminated glass components of the sunroof, side windows, windshield, rear window, and rearview mirror of a vehicle. The controller is connected to the electrochromic film 100 and to the onboard control system of the vehicle. The controller is configured to generate control signals for the electrochromic film 100 based on environmental signals. Since this embodiment includes the electrochromic film 100 described in any of the preceding embodiments, it possesses all the advantages of the electrochromic film 100 described above.

In all examples shown and described herein, any specific values should be interpreted as merely exemplary and not as limitations. Therefore, other examples of exemplary embodiments may have different values.

It should be noted that similar reference numerals and letters in the following figures denote similar items. Therefore, once an item is defined in one figure, it does not need to be further defined and explained in subsequent figures.

Another embodiment of the present application provides a terminal product, including the electrochromic film 100 as described in any of the above embodiments or the color-changing device as described in the above embodiments. The terminal product includes any one of a rearview mirror, a curtain wall, a sunroof of a vehicle, side window of a vehicle, a windshield of a vehicle, electronic product housing, glasses, means of transportation, and display panel. The means of transportation can be any one of a vehicle, a train, an airplane, etc. Since the terminal product uses the electrochromic film 100 described above, it has all the advantages of the electrochromic film 100 described above.

The above embodiments only illustrate several implementation methods of the present application, and their descriptions are relatively specific and detailed, but they should not be construed as limiting the scope of the present application. It should be noted that for those skilled in the art, several modifications and improvements can be made without departing from the concept of the present application, and these all fall within the protection scope of the present application.

### Industrial Applicability

The present application provides an electrochromic film, a color-changing device and a terminal product. The electrochromic film includes an edge portion; the edge portion includes a corner portion and a straight-edge portion, the corner portion is provided with a corner electrode, the straight-edge portion is provided with a straight-edge electrode, and the straight-edge electrode and the corner electrode are spaced apart; the electrochromic film also includes at least one of the following features: the length of the corner electrode is L₁, the average length of the straight-edge electrodes is L₂, and L₂ < L₁; the corner electrode includes a first side extending along a first direction and a second side extending along a second direction, the included angle α between the first side and the second side is in the range of 45° ≤ α ≤ 135°; the perimeter of the edge portion is D, the corner electrode is arc-shaped, and the radius of the corner electrode is N. The value of N is in the range of 1/9 × D ≤ N. This effectively avoids accelerated aging of the corner portion and achieves a balance of electric field intensity at the edge portion of the film.

Furthermore, it is understood that the electrochromic film, the color-changing device, and the terminal product of the present application are reproducible and can be used in a variety of industrial applications. For example, the electrochromic film, the color-changing device, and the terminal product disclosed herein can be used in the field of electrochromic technology.

## Claims

1. An electrochromic film, comprising an edge portion;
wherein the edge portion comprises a corner portion and a straight-edge portion, the corner portion is correspondingly provided with a corner electrode, the straight-edge portion is correspondingly provided with straight-edge electrodes, and the straight-edge electrodes are spaced apart from the corner electrode;
the electrochromic film further comprises at least one of following features:
a length of the corner electrode is L₁, an average length of the straight-edge electrodes is L₂, and L₂ < L₁;
the corner electrode comprises a first side extending along a first direction and a second side extending along a second direction, an included angle α between the first side and the second side is in a range of 45° ≤ α ≤ 135°; and
a perimeter of the edge portion is D, the corner electrode is arc-shaped, and a radius of the corner electrode is N, wherein a value of N is in a range of 1/9 × D ≤ N.

2. The electrochromic film according to claim 1, wherein the L₁ and the L₂ satisfy a condition that: L₂ < L₁ < 4 × L₂.

3. The electrochromic film according to claim 2, wherein a difference between the L₁ and the L₂ is greater than 20% of the L₂.

4. The electrochromic film according to claim 1, wherein a straight-line distance between two ends of the corner electrode is L, wherein the L and the L₂ satisfy a condition that: L₂ < L.

5. The electrochromic film according to claim 1, wherein a first interval region is provided between the corner electrode and a straight-edge electrode adjacent to the corner electrode, a length of the first interval region is L₃;
a second interval region is provided between the adjacent straight-edge electrodes, a length of the second interval region is L₄;
wherein L₄ ≤ L₃.

6. The electrochromic film according to claim 1, wherein the corner electrode protrudes towards the corner portion.

7. The electrochromic film according to claim 1, wherein the electrochromic film comprises a first substrate layer, a first conductive layer, an electrochromic layer, a second conductive layer, and a second substrate layer stacked sequentially; the edge portion of the electrochromic film is provided with a first groove and a second groove; the electrochromic film is electrically connected to a busbar, the busbar comprises a first busbar and a second busbar, the corner electrode comprises a first corner electrode and a second corner electrode, and the straight-edge electrodes comprise a first straight-edge electrode and a second straight-edge electrode;
the first groove penetrates through the first substrate layer, the first conductive layer, and the electrochromic layer along a thickness direction of the electrochromic film to expose a portion of the second conductive layer, forming the first corner electrode and the first straight-edge electrode, and the first corner electrode and the first straight-edge electrode are electrically connected to the first busbar; and
the second groove penetrates through the second substrate layer, the second conductive layer, and the electrochromic layer along the thickness direction of the electrochromic film to expose a portion of the first conductive layer, forming the second corner electrode and the second straight-edge electrode, and the second corner electrode and the second straight-edge electrode are electrically connected to the second busbar.

8. The electrochromic film according to claim 1, wherein the value of α is in a range of 90° ≤ α ≤ 135°.

9. The electrochromic film according to any one of claims 1 to 8, wherein a blocking portion is provided corresponding to the corner electrode, and the blocking portion blocks or reduces a current of a busbar from the corner electrode to a central portion of the electrochromic film.

10. The electrochromic film according to claim 9, wherein the blocking portion comprises an etched region after etching a portion of the conductive layer and/or a filler with a resistance greater than that of the busbar.

11. The electrochromic film according to any one of claims 1 to 8, wherein for any point on the edge portion between two points separated by a first preset distance, the perpendicular distance from this point to the line segment connecting the two points is defined as a second preset distance; when the second preset distance is less than or equal to *n* times the first preset distance, where *n* ranges from 5% to 10%, the corresponding edge portion between the two points is considered as the straight-edge portion;
or, any point on the corresponding edge portion between two points at a first preset distance divides the edge portion between the two points into a first segment and a second segment; a line tangent to the first segment through the point is a first tangent line; a line tangent to the second segment through the point is a second tangent line; when an angle between the first tangent line and the second tangent line is greater than or equal to 135°, the corresponding edge portion between the two points is considered as the straight-edge portion.

12. The electrochromic film according to claim 11, wherein a value of the first preset distance ranges from 30 mm to 300 mm.

13. The electrochromic film according to any one of claims 1 to 8, wherein for any point on the edge portion between two points separated by a first preset distance, the perpendicular distance from this point to the line segment connecting the two points is defined as a second preset distance; when the second preset distance is larger than *n* times the first preset distance, where *n* ranges from 5% to 10%, the corresponding edge portion between the two points is considered as the corner portion;
or, the corner portion comprises a vertex and two ends with edges connected to each other; any point on the corresponding edge portion between two points at a first preset distance divides the edge portion between the two points into a first segment and a second segment; a line tangent to the first segment through the point is a first tangent line; a line tangent to the second segment through the point is a second tangent line; when an angle between the first tangent line and the second tangent line is less than 135°, the point is considered as the vertex of the corner portion.

14. The electrochromic film according to any one of claims 1 to 8, wherein when the electrochromic film is charged or discharged, a maximum electric field intensity in a corner region corresponding to the corner electrode is E₃ₘₐₓ, and a minimum electric field intensity in the edge portion is E₄ₘᵢₙ;
wherein, E₃ₘₐₓ < E₄ₘᵢₙ or a difference between E₃ₘₐₓ and E₄ₘᵢₙ is within 10% of the E₄ₘᵢₙ to 30% of the E₄ₘᵢₙ.

15. A color-changing device, comprising a substrate layer and an electrochromic film according to any one of claims 1 to 14, wherein the substrate layer and the electrochromic film are stacked together.

16. A terminal product, comprising an electrochromic film according to any one of claims 1 to 14 or a color-changing device according to claim 15, wherein the terminal product comprises any one of a rearview mirror, a curtain wall, a vehicle sunroof , a vehicle side window, a vehicle windshield, a housing of an electronic product, an eyeglass, a vehicle, and a display panel.
